# FASCICULE DE BREVET EUROPEEN

(11) **EP 1 281 871 B1**
(45) Date de publication et mention de la délivrance du brevet: **03.01.2007**
(21) Numéro de dépôt: 02291664.7
(22) Date de dépôt: 03.07.2002
(51) Int. Cl.: F04D 29/12, F04D 29/58, F16J 15/34

(54) **Garniture d'étanchéité pour compresseur et compresseur centrifuge pourvu d'une telle garniture**
Abdichtung für Verdichter und Kreiselverdichter mit dieser Abdichtung
Mechanical seal for compressor and centrifugal compressor having this seal

(30) Priorité: 26.07.2001 FR 0110011
(43) Date de publication de la demande: 05.02.2003
(73) Titulaire: Thermodyn, 92400 Courbevoie (FR)
(72) Inventeur: Pugnet, Jean-Marc, 71200 Le Creusot (FR); Bolusset, Daniel, 71200 Le Creusot (FR); Friez, Patrick, 71200 Le Creusot (FR)
(74) Mandataire: Casalonga, Axel

(56) Documents cités:
- EP-A- 0 654 607
- EP-A- 0 781 948
- US-A- 4 872 689

## Description

La présente invention se rapporte à une garniture d'étanchéité pour compresseur rotatif, ainsi qu'à un compresseur doté d'une telle garniture d'étanchéité.

Les compresseurs rotatifs sont des machines tournantes destinées à véhiculer des fluides compressibles, et ont pour objet de transférer de l'énergie mécanique au fluide qui les traverse en vue d'en accroître la pression.

Ils comportent à cet effet un arbre moteur qui entraîne en rotation un ensemble de roues assurant principalement la transmission au fluide de l'énergie mécanique apportée par le moteur entraînant l'arbre.

Dans le but de confiner le fluide sous pression à l'intérieur du corps du compresseur, les bouts d'arbre sont pourvus de garnitures sèches à gaz d'étanchéité.

De telles garnitures sont classiquement pourvues d'un carter (voir EP 0 781 948), d'un grain ou glace fixe monté sur le carter et d'un grain tournant solidaire en rotation d'une chemise montée sur l'arbre moteur du compresseur, ces grains étant par exemple sollicités en appui l'un contre l'autre au moyen d'un ressort.

Lors du fonctionnement du compresseur, les garnitures d'étanchéité sont soumises à des efforts thermiques importants, dus, notamment, à la température du fluide circulant dans le compresseur, à la détente du fluide au niveau des garnitures d'étanchéité, au cisaillement du film de fluide dans l'interface d'étanchéité entre les faces de frottement respectives des grains tournant et fixe, et à des pertes par ventilation engendrées lors de la rotation du grain tournant dans le fluide véhiculé par le compresseur.

Il est connu que ces efforts thermiques engendrent des déformations au niveau du grain tournant et du grain fixe par dilatation différentielle, ce qui risque d'engendrer une perte d'étanchéité voire une destruction du matériel si un contact vient à se produire entre les grains.

En effet, en particulier, des fuites apparaissent généralement au niveau de l'interface entre le grain fixe et le grain tournant, ce qui engendre en aval un abaissement local de la température du fluide relativement important, dû à une détente de ce dernier.

Ainsi, par exemple, pour des applications de récupération assistées de pétrole par injection de gaz naturel, la pression d'équilibre de la boucle du compresseur d'injection de gaz peut atteindre 250 à 300 bars. La détente engendrée au niveau des interfaces d'étanchéité de la garniture du compresseur est susceptible d'abaisser localement la température jusqu'à environ -80°C.

Par ailleurs, les gaz compressibles généralement utilisés dans ce type de compresseur ayant de l'eau pour constituant, l'abaissement de la température est susceptible d'engendrer une formation consécutive d'hydrates, pour lesquels la température de formation est de l'ordre de -10°C.

Les hydrates étant des composés solides, leur présence risque de bloquer le grain fixe par rapport aux parties tournantes du compresseur, ce qui est susceptible d'engendrer une perte d'étanchéité à l'arrêt de la machine, voire d'interdire le redémarrage de cette dernière, tant que la température reste inférieure à la température de formation des hydrates.

Le but de l'invention est de pallier ces inconvénients et de fournir une garniture d'étanchéité et un compresseur centrifuge capables d'assurer un réchauffement du fluide en aval des interfaces d'étanchéité des garnitures pendant l'arrêt pressurisé de la machine.

Ainsi, selon l'invention, il est proposé une garniture d'étanchéité pour compresseur, comprenant un carter, au moins un ensemble constitué d'un grain tournant solidaire en rotation d'une chemise destinée à être montée sur un arbre du compresseur et d'un grain statorique monté sur le carter, les grains étant sollicités en appui l'un contre l'autre par leur face de frottement.

Selon un aspect de cette garniture, celle-ci comporte en outre des moyens de circulation d'un fluide de réchauffement des fuites de fluide compressible véhiculé par le compresseur qui se produisent entre les grains, lesdits moyens de circulation étant ménagés dans le carter et s'étendant au moins en partie en aval des grains, en considérant le sens d'écoulement dudit flux de fluide.

On réchauffe ainsi le fluide circulant dans les garnitures du compresseur, ce qui permet de compenser le refroidissement engendré lors de la détente de ce dernier en aval des interfaces d'étanchéité.

Selon un autre aspect de cette garniture, les moyens de circulation comportent un canal de réchauffement en communication avec une source d'alimentation en fluide de réchauffement dont le fonctionnement est indépendant de celui des moyens d'alimentation du compresseur en fluide compressible.

On peut dès lors prévoir un réchauffement du fluide au sein des garnitures d'étanchéité même à l'arrêt du compresseur.

Selon un mode de réalisation particulier, le carter est pourvu d'une conduite d'écoulement des fuites de fluide, dans laquelle est placée une paroi qui délimite avec le carter ledit canal et qui constitue une surface d'échange d'énergie calorifique.

De préférence, la face de la paroi tournée vers le canal de réchauffement est pourvue de nervures formant dans ce dernier un serpentin de réchauffement.

Par exemple, le fluide de réchauffement est constitué par de l'huile.

Selon un autre mode de réalisation, la garniture d'étanchéité comporte en outre un échangeur de chaleur disposé en regard du grain tournant.

Selon l'invention, il est également proposé un compresseur centrifuge, comprenant un arbre moteur entraînant en rotation un ensemble de roues aptes à assurer un transfert de l'énergie mécanique apportée par l'arbre moteur à un fluide compressible et au moins une garniture d'étanchéité de sortie d'arbre.

Selon un aspect de ce compresseur, la où chaque garniture est constituée par une garniture d'étanchéité telle que définie ci-dessus.

D'autres buts, caractéristiques et avantages de l'invention ressortiront de la description suivante, donnée uniquement à titre d'exemple non limitatif, et faite en référence aux dessins annexés, sur lesquels :
- la figure 1 est une vue schématique en coupe longitudinale d'un compresseur centrifuge ;
- la figure 2 est une vue schématique illustrant la structure d'une garniture d'étanchéité selon l'état de la technique ; et
- la figure 3 est un schéma illustrant la structure d'une garniture d'étanchéité selon l'invention.

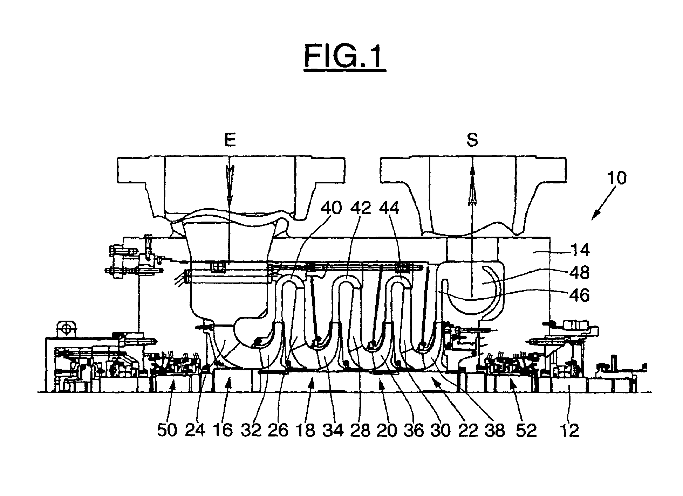

Sur la figure 1, on a représenté la structure générale d'un compresseur centrifuge, désigné par la référence numérique générale 10.

Il est destiné à manipuler un fluide compressible et a pour objet de transférer de l'énergie mécanique à ce fluide en vue d'en accroître la pression.

Dans l'exemple de réalisation représenté, le compresseur 10 est constitué par un compresseur multicellulaire, c'est-à-dire à plusieurs étages. Le compresseur 10 comporte en effet quatre étages de compression.

Il comprend essentiellement un arbre moteur 12 entraîné en rotation par des moyens moteurs appropriés et tourillonnant dans un carter 14.

Ce carter 14 est pourvu d'une entrée E d'admission de fluide compressible en communication avec une source d'alimentation appropriée pour l'utilisation envisagée, et d'une sortie S de distribution de fluide comprimé.

Entre l'entrée E et la sortie S, le carter 14 est pourvu des quatre étages de compression 16, 18, 20 et 22.

Chaque étage 16, 18, 20 et 22 comporte, de l'amont vers l'aval, en considérant le sens de circulation du fluide dans le compresseur 10, une directrice d'entrée 24, 26, 28 et 30 assurant le guidage de l'écoulement selon la direction la plus favorable pour son admission dans l'étage de compression, une roue à aubes 32, 34, 36, 38 assurant la transmission proprement dite de l'énergie mécanique apportée par l'arbre moteur au fluide compressible, une partie de l'énergie mécanique introduite étant convertie en pression, une autre partie étant convertie en vitesse, et un redresseur ou diffuseur 40, 42, 44 et 46 assurant une réduction de la vitesse du fluide en vue de la transformation de la pression dynamique de ce dernier en pression statique.

Comme on le voit sur cette figure 1, le dernier étage 22 de compression débouche, en aval, dans une volute 48 de section évolutive constituant un diffuseur final apte à réduire les pertes entre le dernier étage de compression et la sortie S.

Par ailleurs, le compresseur est pourvu de garnitures d'étanchéité, désignées par les références numériques générales 50 et 52, équipant le carter au voisinage des sorties d'arbre et assurant le confinement du fluide sous pression à l'intérieur du carter 14. Les arrangements de ces garnitures d'étanchéité peuvent être simple (un seul joint vers l'extérieur), double (un joint vers l'extérieur avec gaz de barrage) ou tandem (deux joints en série vers l'extérieur), suivant les applications.

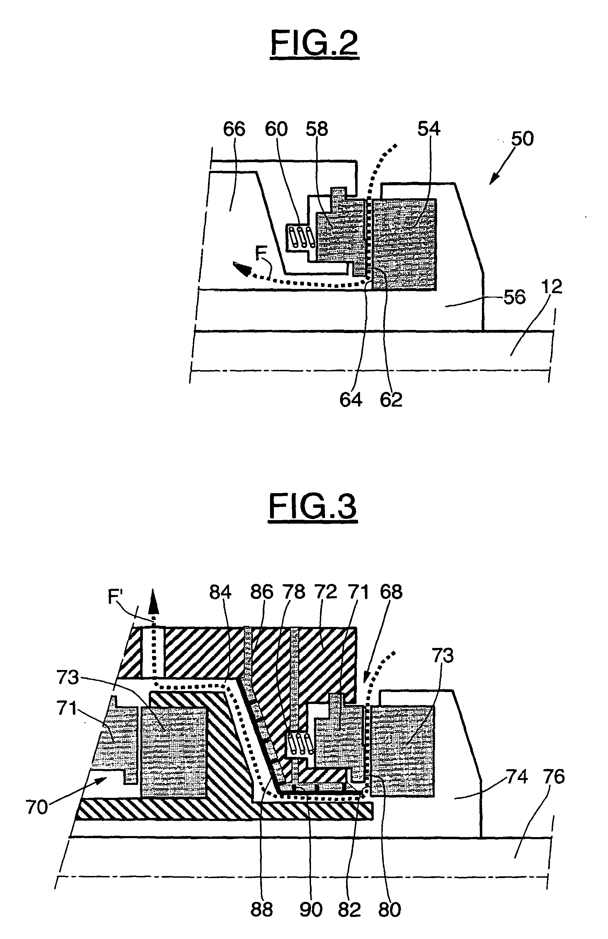

Sur la figure 2, on a représenté la structure générale d'une garniture d'étanchéité selon l'état de la technique. Par exemple, cette garniture d'étanchéité correspond à la garniture désignée par la référence numérique générale 50. Sur cette figure 2, des éléments identiques à ceux de la figure 1 portent les mêmes numéros de référence.

Cette garniture comporte une glace tournante ou un grain tournant 54 solidaire en rotation d'une chemise 56, elle-même fixée sur l'arbre 12 du compresseur, ainsi qu'un grain statorique 58 fixé sur le carter 14 et axialement déplaçable par rapport à celui-ci.

Des moyens élastiquement déformables, constitués par un ressort 60, sollicitent le grain statorique 58 en appui contre le grain tournant 54 par leur face de frottement 62 et 64 respective.

Des moyens d'étanchéité complémentaires (non représentés) assurent une étanchéité entre les grains 54 et 58 et les éléments du compresseur sur lesquels ils sont montés.

Comme représenté par la flèche F, en fonctionnement, une fuite de fluide compressible apparaît entre les interfaces d'étanchéité 62 et 64 de la garniture, c'est-à-dire entre les faces de frottement des grains tournant et statorique.

Le carter 14 du compresseur est alors pourvu d'une conduite 66 d'écoulement de la fuite de gaz, débouchant par exemple dans un réseau de torches (non représenté).

Comme indiqué précédemment, ce type de garniture d'étanchéité présente un inconvénient majeur relatif à leur fonctionnement thermique.

En effet, pendant la rotation, des recirculations de gaz en provenance du compresseur conditionnent thermiquement la garniture, c'est-à-dire évacuent les calories, comme cela est connu en soi. A l'arrêt, ces circulations, qui n'existent plus puisque l'on ne dispose plus de différence de pression naturelle, et sont inopérantes aussi bien pour refroidir la garniture que pour réchauffer les fuites.

A la sortie de l'interface d'étanchéité constituée par les faces de frottement 62 et 64 des grains, le fluide subit une détente engendrant un abaissement consécutif de la température de ce dernier tel que des hydrates sont susceptibles d'être créés.

Comme cela est connu en soi, ces hydrates sont constitués par des composés solides qui risquent de bloquer le grain stationnaire et, par conséquent, d'altérer le fonctionnement du compresseur.

On va maintenant décrire, en référence à la figure 3, une garniture d'étanchéité permettant de pallier cet inconvénient.

Dans l'exemple de réalisation représenté sur cette figure, cette garniture est constituée par une garniture de type tandem, c'est-à-dire qu'elle comporte deux garnitures d'étanchéité 68 et 70 disposées en série.

Chaque garniture d'étanchéité proprement dite comporte un grain fixe ou statorique 71 monté sur un carter 72 du compresseur et un grain tournant ou glace tournante 73 solidaire d'un chemise 74, elle-même montée sur l'arbre moteur 76 du compresseur.

Un moyen élastique constitué par un ressort 78 sollicite l'une contre l'autre les interfaces d'étanchéité constituées par les faces de frottement 80 et 82 en regard des grains statorique et tournant.

Comme indiqué précédemment, des fuites, désignées par la flèche F', engendrent un écoulement de fluide compressible entre les interfaces d'étanchéité 80 et 82, lesquelles s'écoulent dans une conduite d'écoulement 84 ménagée à cet effet dans le carter 72.

Dans le but de pallier les inconvénients liés à la détente du fluide compressible en aval des interfaces d'étanchéité 80 et 82, le carter 72 est pourvu de moyens de circulation d'un fluide de réchauffement, agencés sous la forme d'un canal de réchauffement 86 s'étendant au moins en partie en aval des grains 71 et 73.

Ce canal 86 est raccordé à une source d'alimentation en fluide de réchauffement, par exemple une huile dont la capacité calorique est appropriée pour permettre un transfert efficace de calories vers la conduite 84.

On notera que la température et la pression du fluide sont choisies pour assurer un réchauffement suffisant du fluide dans la conduite d'écoulement 84 pour éviter la formation d'hydrate.

Comme on le voit sur la figure 3, dans le but d'assurer un transfert efficace des calories vers le fluide circulant dans la conduite 84, le canal de réchauffement 86 est ménagé dans la conduite 84 et est réalisé en plaçant dans cette dernière une paroi 88 qui délimite avec le carter 72 le canal 86.

La paroi 88 comporte, sur sa face tournée vers le canal 86, des nervures, telles que 90, de manière à former un serpentin de réchauffement dans le canal 86.

Comme on le conçoit, la paroi 88 est également choisie de manière à former une surface d'échange thermique suffisante pour, conjointement avec le niveau de température et de pression du fluide de réchauffement circulant dans le canal 86, éviter la formation d'hydrates dans le fluide circulant dans la conduite 84 d'écoulement des fuites.

Comme on le conçoit, la température de formation des hydrates dépend de la composition du fluide manipulé par le compresseur. La détermination des paramètres permettant d'élever la température du fluide jusqu'à un niveau supérieur à cette température de formation d'hydrates étant à la portée d'un du métier, elle ne sera donc pas décrite en détail par la suite

On notera par ailleurs que la paroi 88 est réalisée en un matériau apte à supporter les pressions relativement élevées qui pourraient régner dans ces garnitures en cas de détérioration du joint d'étanchéité en service, afin d'éviter une sortie de gaz inflammable de procédé vers l'atmosphère.

Enfin, en ce qui concerne la source d'alimentation en fluide de réchauffement, de préférence, celle-ci est constituée par une source d'alimentation dont le fonctionnement est indépendant du fonctionnement du reste du compresseur, et en particulier, du fonctionnement de la source d'alimentation en fluide compressible. L'indépendance de cette source d'alimentation est également de nature à lui assurer une grande disponibilité, importante pour la fiabilité de cette garniture

Il est ainsi possible d'assurer un réchauffement du fluide circulant dans la conduite 84 d'écoulement de fuite, même à l'arrêt du compresseur.

On évite ainsi tout risque de blocage du grain stationnaire 71 par rapport aux parties tournantes du compresseur, même à l'arrêt de ce dernier.

On s'affranchit alors de toute nécessité de vider décompresser l'installation dans laquelle est incorporé le compresseur.

On notera enfin que l'invention n'est pas limitée au mode de réalisation envisagé.

Ce dispositif contribue également à refroidir la garniture sèche lors de son fonctionnement en rotation. Il est en effet également possible, en variante, de compléter le compresseur par un échangeur de chaleur complémentaire assurant le réchauffement du fluide dans la ou les garnitures, par exemple placé en regard du grain tournant.

## Revendications

1. Garniture d'étanchéité pour compresseur rotatif, comprenant un carter (72), au moins un ensemble constitué d'un grain tournant (73) solidaire en rotation d'une chemise (74) destinée à être montée sur un arbre (76) du compresseur et d'un grain statorique (71) monté sur le carter, les grains (71, 73) étant sollicités en appui l'un contre l'autre par leur face de frottement, comportant en outre des moyens (86, 88, 90) de circulation d'un fluide de réchauffement de fuites de fluide compressible véhiculé par le compresseur qui se produisent entre les grains (71, 73), lesdits moyens de circulation étant ménagés dans le carter (72) et **caractérisée en ce que** lesdits moyens de circulation s'étendent au moins en partie en aval des grains, en considérant le sens d'écoulement dudit flux de fluide.

2. Garniture d'étanchéité selon la revendication 1, **caractérisée en ce que** lesdits moyens de circulation comportent un canal de réchauffement (86) en communication avec une source d'alimentation en fluide de réchauffement dont le fonctionnement est indépendant de celui des moyens d'alimentation du compresseur en fluide compressible.

3. Garniture d'étanchéité selon la revendication 2, **caractérisée en ce que** le carter (72) est pourvu d'une conduite (84) d'écoulement des fuites de fluide dans laquelle est placée une paroi (88) qui délimite avec le carter ledit canal et qui constitue une surface d'échange d'énergie calorifique.

4. Garniture d'étanchéité selon la revendication 3, **caractérisée en ce que** la face de la paroi tournée vers le canal (86) est pourvue de nervures (90) formant dans ce dernier un serpentin de réchauffement.

5. Garniture d'étanchéité selon l'une quelconque des revendications 1 à 4, **caractérisée en ce que** le fluide de réchauffement est constitué par de l'huile.

6. Garniture d'étanchéité selon l'une quelconque des revendications 1 à 5, **caractérisé en ce qu'**il comporte en outre un échangeur de chaleur disposé en regard du grain tournant (73).

7. Compresseur centrifuge, comprenant un arbre moteur (12, 76) entraînant en rotation un ensemble de roues (32, 34, 36, 38) aptes à assurer un transfert de l'énergie mécanique apportée par l'arbre moteur à un fluide compressible et au moins une garniture d'étanchéité (50, 52) de sortie d'arbre, **caractérisé en ce que** la ou chaque garniture est constituée par une garniture d'étanchéité selon l'une quelconque des revendications 1 à 6.

8. Compresseur centrifuge selon la revendication 7, **caractérisé en ce qu'**il comporte une source d'alimentation desdits moyens (86, 88, 90) de circulation en fluide de réchauffement de fuites de fluide compressible, dont le fonctionnement est indépendant du fonctionnement du reste du compresseur.

## Claims

1. Seal for a rotary compressor, comprising a casing (72), at least one assembly consisting of a rotating seal face ring (73) which rotates as one with a sleeve (74) intended to be mounted on a shaft (76) of the compressor and of a stationary seal face ring (71) mounted on the casing, the seal face rings (71, 73) being urged to press against one another via their rubbing face, this seal further comprising means (86, 88, 90) for circulating a fluid for heating the leaks of compressible fluid conveyed by the compressor and which occur between the seal face rings (71, 73), the said circulating means being formed in the casing (72), **characterized in that** the said circulating means extend at least partially downstream of the seal face rings when considering the direction of flow of the said stream of fluid.

2. Seal according to Claim 1, **characterized in that** the said circulating means comprise a heating duct (86) in communication with a supply source of heating fluid which operates independently of the means supplying the compressor with compressible fluid.

3. Seal according to Claim 2, **characterized in that** the casing (72) is provided with a passage (84) for the flow of the leaks of fluid and in which there is positioned a wall (88) which, with the casing, delimits the said duct and which constitutes a surface for the exchange of heat energy.

4. Seal according to Claim 3, **characterized in that** the face of the wall facing towards the duct (86) is provided with ribs (90) forming therein a heating coil.

5. Seal according to any one of Claims 1 to 4, **characterized in that** the heating fluid consists of oil.

6. Seal according to any one of Claims 1 to 5, **characterized in that** it further comprises a heat exchanger arranged facing the stationary seal face ring (73).

7. Centrifugal compressor comprising a drive shaft (12, 76) driving the rotation of a collection of wheels (32, 34, 36, 38) able to transfer the mechanical energy supplied by the drive shaft to a compressible fluid and at least one shaft output seal (50, 52), **characterized in that** the or each seal consists of a seal according to any one of Claims 1 to 6.

8. Centrifugal compressor according to Claim 7, **characterized in that** it comprises a source supplying the said circulating means (86, 88, 90) with fluid for heating the leaks of compressible fluid, the operation of which is independent of the operation of the rest of the compressor.

## Patentansprüche

1. Abdichter für einen Kreiselverdichter umfassend ein Gehäuse (72), mindestens eine aus einem Drehzahn (73), welcher sich zusammen mit einem zur Montage an einer Welle (76) des Verdichters bestimmten Mantel (74) dreht, und einem Statorzahn (71), der auf dem Gehäuse angebracht ist, gebildete Gruppe, wobei die Zähne (71, 73) an ihrer Reibungsfläche zur Anlage aneinander gebracht werden, der außerdem Mittel (86, 88, 90) zum Zirkulieren eines Fluids zum Erwärmen der zwischen den Zähnen (71, 73) entstehenden Abströmungen von durch den Verdichter transportiertem verdichtbarem Fluid enthält, wobei die Zirkulationsmittel in dem Gehäuse (72) angeordnet sind, und **dadurch gekennzeichnet, dass** die Zirkulationsmittel sich mindestens zum Teil stromabwärts der Zähne mit Bezug auf die Strömungsrichtung des Fluidstroms erstrecken.

2. Abdichter nach Anspruch 1, **dadurch gekennzeichnet, dass** die Zirkulationsmittel einen Erwärmungskanal (86) enthalten, der sich in Kommunikation mit einer Zuleitungsquelle für Erwärmungsfluid befindet, deren Funktion unabhängig von der der Zuleitungsmittel des Verdichters für verdichtbares Fluid ist.

3. Abdichter nach Anspruch 2, **dadurch gekennzeichnet, dass** das Gehäuse (72) mit einer Leitung (84) zum Abströmen von Fluid versehen ist, in der eine Wand (88) angeordnet ist, welche zusammen mit dem Gehäuse den Kanal beschränkt und eine Oberfläche zum Austauschen von Wärmeenergie darstellt.

4. Abdichter nach Anspruch 3, **dadurch gekennzeichnet, dass** die dem Kanal (86) zugewandte Seite der Wand mit Rippen (90) versehen ist, die auf der Wand Erwärmungsserpentinen bilden.

5. Abdichter nach einem der Ansprüche 1 bis 4, **dadurch gekennzeichnet, dass** das Erwärmungsfluid aus Öl besteht.

6. Abdichter nach einem der Ansprüche 1 bis 5, **dadurch gekennzeichnet, dass** er außerdem einen gegenüber dem Drehzahn (73) angeordneten Wärmetauscher umfasst.

7. Verdichtungskreisel, umfassend eine Motorwelle (12, 76), die bei der Drehung eine Gruppe von Rädern (32, 34, 36, 38) antreibt, welche eine Übertragung der durch die Motorwelle eingebrachten mechanischen Energie auf ein verdichtbares Fluid sicherstellen können, und mindestens einen Abdichter (50, 52) am Ausgang der Welle, **dadurch gekennzeichnet, dass** der oder jeder Abdichter aus einem Abdichter nach einem der Ansprüche 1 bis 6 besteht.

8. Verdichtungskreisel nach Anspruch 7, **dadurch gekennzeichnet, dass** er eine Zuleitungsquelle der Mittel (86, 88, 90) zum Zirkulieren des Fluids zum Erwärmen der Abströmungen des verdichtbaren Fluids umfasst, deren Funktion unabhängig von der Funktion des übrigen Verdichters ist.
